(19) Europäisches Patentamt
European Patent Office
Office européen des brevets

(11) **EP 2 875 231 B1**

(12) **EUROPÄISCHE PATENTSCHRIFT**

(45) Veröffentlichungstag und Bekanntmachung des Hinweises auf die Patenterteilung:
**13.09.2017  Patentblatt 2017/37**

(21) Anmeldenummer: **13750515.2**

(22) Anmeldetag: **19.07.2013**

(51) Int Cl.:
**F02M 55/04** *(2006.01)*

(86) Internationale Anmeldenummer:
**PCT/EP2013/065318**

(87) Internationale Veröffentlichungsnummer:
**WO 2014/013059 (23.01.2014 Gazette 2014/04)**

(54) **KRAFTSTOFFEINSPRITZSYSTEM**

FUEL INJECTION SYSTEM

SYSTÈME D'INJECTION DE CARBURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2012  DE 102012212745**

(43) Veröffentlichungstag der Anmeldung:
**27.05.2015  Patentblatt 2015/22**

(73) Patentinhaber: **FMP Technology GmbH Fluid Measurements & Projects**
**91058 Erlangen (DE)**

(72) Erfinder:
• **DURST, Franz**
**91094 Langensendelbach (DE)**
• **ZEILMANN, Michael**
**91344 Waischenfeld (DE)**
• **MOHANTY, Ritesh Prashanna**
**Ithaca,**
**New York 14853 (US)**

(74) Vertreter: **Dr. Gassner & Partner mbB**
**Marie-Curie-Str. 1**
**91052 Erlangen (DE)**

(56) Entgegenhaltungen:
**EP-A1- 2 110 542        DE-A1-102009 016 689**
**DE-A1-102009 029 219    DE-B3-102004 008 590**
**GB-A- 2 356 020         JP-A- H09 170 514**

**Beschreibung**

Die Erfindung betrifft ein Kraftstoffeinspritzsystem, insbesondere ein Common Rail Einspritzsystem, nach dem Oberbegriff des Anspruchs 1.

Ein solches Kraftstoffeinspritzsystem ist beispielsweise aus der WO 2004/036029 A1 bekannt. Bei dem bekannten Kraftstoffeinspritzsystem weist eine Dämpfungsvorrichtung zum Dämpfen von Druckpulsationen einen Sintermetalleinsatz auf.

Die DE 103 51 089 A1 offenbart ein Verfahren zum Verringern von Druckpulsationen in einem Hydrauliksystem mit einem Hydraulikstrom, der einem Pulsationsdämpfer zugeführt wird. Der Pulsationsdämpfer weist eine Mehrzahl von Strömungskanälen zur Unterteilung des Hydraulikstroms in eine Mehrzahl von Teilströmen auf.

Die EP 1 741 925 A1 betrifft einen Injektor, welcher einen mit mehreren Bohrungen versehenen Dämpfer aufweist.

Die JP 08261099 A offenbart einen Pulsationsdämpfer, bei dem in einem Gehäuse Kugeln mit zwei unterschiedlichen Durchmessern aufgenommen sind.

Aus der DE 10 2006 016 937 A1 ist ein hydraulischer Pulsationsdämpfer bekannt, bei dem in einem Gehäuse als Dämpfungsmittel ein Filterelement aus geschäumtem Polyethylen oder gesintertem Metallgewebe oder Glasfasergewebe aufgenommen ist. Ein solches Kraftstoffeinspritzsystem ist auch aus der JP09170514A bekannt. Die nach dem Stand der Technik bekannten Dämpfungsvorrichtungen erfordern einen relativ hohen Herstellungsaufwand. Soweit als Dämpfungsmittel poröse Medien verwendet werden, besteht das Risiko einer Verstopfung durch Schmutzpartikel. Im Falle von Dieselfahrzeugen besteht insbesondere im Winter bei niedrigen Temperaturen das weitere Risiko eines Zusetzens des Filtermediums durch ausfallendes Paraffin.

Aufgabe der vorliegenden Erfindung ist es, die Nachteile nach dem Stand der Technik zu beseitigen. Es soll insbesondere ein Kraftstoffeinspritzsystem mit einer einfach und kostengünstig herstellbaren Dämpfungsvorrichtung angegeben werden. Nach einem weiteren Ziel der Erfindung soll die Dämpfungsvorrichtung einen möglichst störungsfreien Betrieb des Kraftstoffeinspritzsystems gewährleisten.

Diese Aufgabe wird durch die Merkmale des Anspruchs 1 gelöst. Zweckmäßige Ausgestaltungen der Erfindung ergeben sich aus den Merkmalen der Ansprüche 2 bis 13.

Nach Maßgabe der Erfindung wird vorgeschlagen, dass die Dämpfungsvorrichtung ein Rohr aufweist, in dem ein über Abstandshalter unter Ausbildung eines Ringspalts beabstandet gehaltener Kern vorgesehen ist. - Die vorgeschlagene Dämpfungsvorrichtung kann unter Verwendung weniger Teile einfach und kostengünstig hergestellt werden. Das Vorsehen eines Ringspalts macht die Dämpfungsvorrichtung unanfällig gegen ein Zusetzen durch im Kraftstoff enthaltene Verunreinigungen oder Paraffin.

Im Sinne der vorliegenden Erfindung wird unter dem Begriff "Ringspalt" ein sich im Wesentlichen über die gesamte axiale Länge des, vorzugsweise zylindrischen, Kerns erstreckender Durchgang verstanden. Der Ringspalt weist eine radiale Spaltweite auf, welche im Wesentlichen über die gesamte axiale Länge des Kerns im Wesentlichen konstant ist. Der Ringspalt hat im Wesentlichen ringförmige Ein- und Auslassöffnungen. Der Ringspalt kann über seinen Umfang hinweg auch, beispielsweise durch die zum Halten des Kerns erforderlichen Abstandshalter, unterbrochen sein.

Es hat sich als vorteilhaft erwiesen, dass eine axiale Länge l des Kerns 0,5 bis 50 mm beträgt. Eine durch die Differenz eines Innendurchmessers d des Rohrs und eines Außendurchmessers D des Kerns gegebene Spaltweite $\delta$ beträgt zweckmäßigerweise 5 $\mu$m bis 200 $\mu$m. Ferner hat es sich als zweckmäßig erwiesen, dass der Außendurchmesser D des Kerns etwa 0,5 bis 50 mm, vorzugsweise 2 bis 20 mm, beträgt. Eine derart ausgestaltete Dämpfungsvorrichtung zeichnet sich insbesondere für Common Rail Einspritzsysteme durch eine hervorragende Dämpfung von Druckpulsationen aus.

Nach einer vorteilhaften Ausgestaltung der Erfindung sind die Länge $\ell$ und die Spaltweite $\delta$ so gewählt, dass ein Druckverlust $\Delta$P zwischen 3 und 12 bar, vorzugsweise zwischen 6 und 9 bar, liegt, wobei gilt:

$$\Delta P = [const. * \mu * \dot{v} * \ell] / [\delta^3 * D],$$

wobei

$\mu$   eine vorgegebene Viskosität des Flüssigkeitskraftstoffs,
$\dot{v}$   ein sich einstellender Volumenstrom, und
D   der Außendurchmesser des Kerns ist.

Bei dem Wert $\mu$ handelt es sich um die Viskosität des jeweils verwendeten Flüssigkeitskraftstoffs, beispielsweise die Viskosität von Dieselkraftstoff oder Benzin. Der vorgegebene Volumenstrom ergibt sich insbesondere aus der Ausgestaltung der jeweils verwendeten Injektoren des Injektionsdrucks und der Einspritzzeiten. Wie aus der obigen Beziehung ersichtlich ist, wird der Druckverlust ∆P zweckmäßigerweise auf einen Wert von beispielsweise 7 bar festgelegt. Bei gegebener Viskosität des Flüssigkeitskraftstoffs sowie gegebenen Volumenstrom ergibt sich daraus unmittelbar eine geeignete Beziehung zwischen der Länge ℓ, den Außendurchmesser D des Kerns sowie der Spaltbreite δ. Es kann beispielsweise bei vorgegebener Länge ℓ eine geeignete Spaltbreite δ oder umgekehrt berechnet werden. Der vorgenannte Druckverlust ∆P gilt für $\mu$ = $10^{-3}$ Ns/m$^2$ und $\dot{v}$ = 0,25 l/min. Für andere Viskositäten $\mu$ und/oder Volumenströme $\dot{v}$ kann nach der obigen Formel ein geeigneter Druckverlust ∆P berechnet werden.

Nach einer vorteilhaften Ausgestaltung sind die Abstandshalter gleichmäßig über den Außenumfang des Kerns verteilt. Insbesondere können n Abstandshalter jeweils in einem Winkel von 360°/n voneinander beabstandet über den Außenumfang des Kerns verteilt sein.

Die Abstandshalter können separate Teile sein, welche beispielsweise stab- oder stegartig ausgebildet sind. Damit kann der Kern reibschlüssig unter Ausbildung eines Ringspalts im Rohr gehalten werden. Zweckmäßigerweise erstrecken sich die stab- oder stegförmigen Abstandshalter über die gesamte axiale Länge des Kerns. Der Kern ist vorzugsweise zylindrisch ausgebildet. Er kann an zumindest einem Ende kegelartig zugespitzt sein.

Nach einer vorteilhaften Ausgestaltung der Erfindung ist der Kern in einem Stück mit den Abstandshaltern ausgebildet. Desgleichen kann auch das Rohr in einem Stück mit den Abstandshaltern ausgebildet sein. Zweckmäßigerweise ist/sind der Kern und/oder das Rohr mittels Strangpressen hergestellt. Das Rohr und/oder der Kern sind zweckmäßigerweise aus Metall, vorzugsweise aus Edelstahl, hergestellt.

Nach einer besonders vorteilhaften Ausgestaltung der Erfindung ist der Kern in das Rohr eingeschrumpft. Der Vorgang des Einschrumpfens lässt sich einfach und kostengünstig durchführen. Damit kann - im Vergleich zum Stand der Technik - auf besonders einfache und kostengünstige Weise eine Dämpfungsvorrichtung zum Dämpfen von Druckpulsationen bei einem Kraftstoffeinspritzsystem hergestellt werden.

Nach einer weiteren Ausgestaltung sind die Abstandshalter aus Stiften gebildet, welche in im Kern vorgesehene Bohrungen eingesetzt sind. Bei den Bohrungen kann es sich um Sacklöcher handeln. Die Stifte erstrecken sich über einen vorgegebenen Abstand über den Umfang des Kerns hinaus. Deren dem Rohr zugewandte Außenfläche kann einen Radius aufweisen, welcher zum Innenradius des Rohrs korrespondiert, so dass die Stifte im Montagezustand formschlüssig an der Innenwand des Rohrs anliegen. Die Bohrungen verlaufen bezüglich einer Achse des Kerns radial. In einer Axialebene des Kerns sind vorteilhafterweise gleichmäßig über den Umfang verteilt zumindest drei, vorzugsweise vier, Stifte vorgesehen, welche als Abstandshalter wirken.

Nachfolgend wird ein Ausführungsbeispiel der Erfindung anhand der Zeichnungen näher erläutert. Es zeigen:

Fig. 1      eine schematische Ansicht eines Kraftstoffeinspritzsystems,
Fig. 2      eine Draufsicht auf eine Dämpfungsvorrichtung,
Fig. 3      eine Seitenansicht des Kerns gemäß Fig. 2,
Fig. 4      eine Ausgestaltung eines Kerns,
Fig. 5      eine weitere Ausgestaltung eines Kerns,
Fig. 6      eine Draufsicht auf eine zweite Dämpfungsvorrichtung,
Fig. 7      eine Draufsicht auf eine nicht vom Anspruchswortlaut umfasste dritte Dämpfungsvorrichtung,
Fig. 8      eine Draufsicht auf den Kern gemäß Fig. 7,
Fig. 9      eine Simulation des Druckverlaufs am Injektor sowie am Common Rail Rohr ohne Dämpfungsvorrichtung,
Fig. 10    eine Messung des Druckverlaufs am Injektor sowie am Common Rail Rohr ohne Dämpfungsvorrichtung,
Fig. 11    eine Simulation des Druckverlaufs am Injektor und am Common Rail Rohr mit Dämpfungsvorrichtung,
Fig. 12    eine weitere Simulation des Druckverlaufs am Injektor und am Common Rail Rohr ohne Dämpfungsvorrichtung,
Fig. 13    eine weitere Simulation gemäß Fig. 10, wobei eine Dämpfungsvorrichtung vorgesehen ist,
Fig. 14    eine Seitenansicht einer weiteren Ausgestaltung eines Kerns und
Fig. 15    eine Draufsicht gemäß Fig. 14.

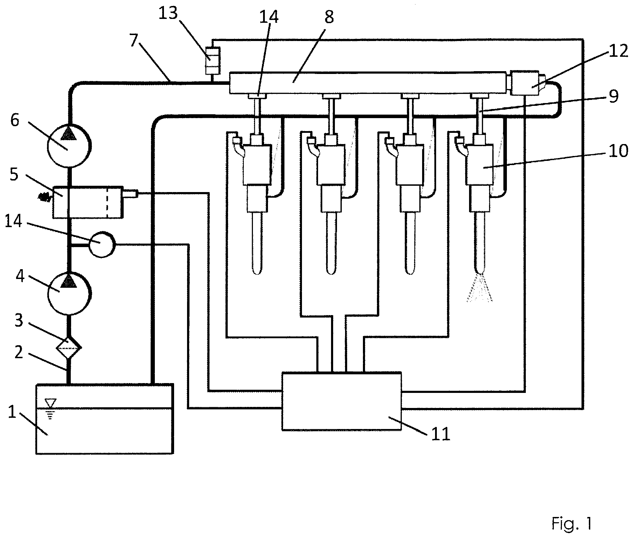

Fig. 1 zeigt schematisch ein erfindungsgemäßen Kraftstoffeinspritzsystem, nämlich ein Common Rail Einspritzsystem. In einem Tank 1 ist Kraftstoff F aufgenommen. In eine vom Tank 1 wegführende Kraftstoffleitung 2 ist ein Kraftstofffilter 3 eingeschaltet. Mit dem Bezugszeichen 4 ist eine Kraftstofffförderpumpe bezeichnet, mit der über ein Druckregelventil 5 der Kraftstoff F einer Hochdruckpumpe 6 zugeführt wird. Die Hochdruckpumpe 6 ist über eine erste Hochdruckleitung 7 mit einem Verteilerrohr 8 verbunden. Das Verteilerrohr 8 ist jeweils über eine zweite Hochdruckleitung 9 mit einem Injektor 10 verbunden. Im vorliegenden Beispiel sind vier zweite Hochdruckleitungen 9 vorgesehen, an denen stromabwärts jeweils ein Injektor 10 angeschlossen ist.

Mit dem Bezugszeichen 11 ist ein Steuergerät bezeichnet, mit dem die Injektoren 10 in Abhängigkeit einer Vielzahl von Parametern gesteuert werden. Das Steuergerät 10 ist u. a. mit einem Druckbegrenzer 12, einem Rail Drucksensor 13, einem Kraftstofftemperatursensor 14 sowie dem Druckregelventil 5 zu Mess- bzw. Steuerzwecken verbunden. Mit dem Bezugszeichen 14 sind stromabwärts am Verteilerrohr 8 vorgesehene Dämpfungsvorrichtungen bezeichnet.

Die Dämpfungsvorrichtungen 14 sind hier unmittelbar am Verteilerrohr 8 jeweils an einem für jede der zweiten Hochdruckleitungen 9 vorgesehenen Auslass montiert. An einem Ausgang der Dämpfungsvorrichtungen 14 sind die zweiten Hochdruckleitungen 9 angeschlossen. Es kann aber auch sein, dass die Dämpfungsvorrichtungen 14 in die zweiten Hochdruckleitungen 9 eingeschaltet oder an einem injektorseitigen Ende der zweiten Hochdruckleitungen 9 angebracht sind.

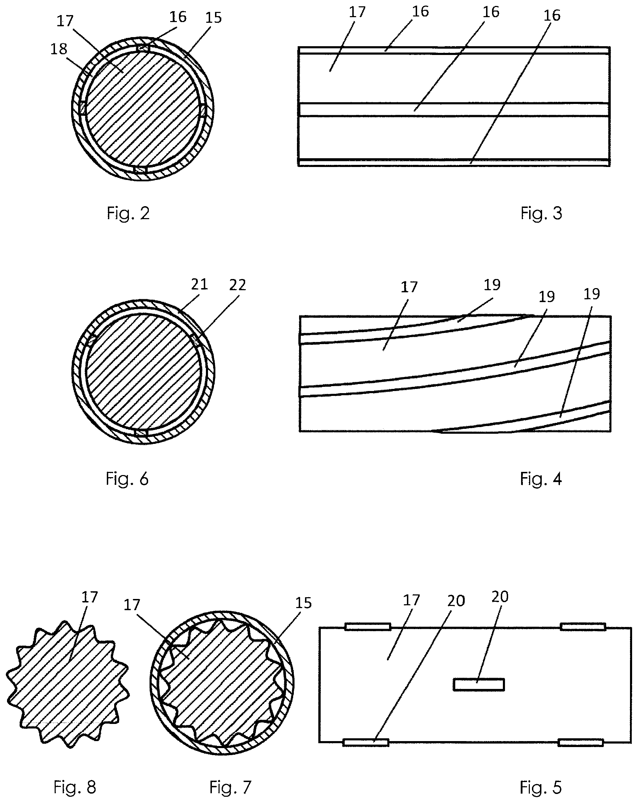

Fig. 2 zeigt eine Draufsicht auf eine Dämpfungsvorrichtung 14. Sie umfasst ein Rohr 15, in dem mittels Abstandshaltern 16 ein Kern 17 gehalten wird. - Wie insbesondere in Zusammensicht mit Fig. 3 erkennbar ist, erstrecken sich die Abstandshalter 16 über die gesamte axiale Länge des zylindrischen Kerns 17. Sie sind radial um 90° voneinander beabstandet.

Der Kern 17 ist zweckmäßigerweise in das Rohr 15 eingeschrumpft. Das gewährleistet einen sicheren und zuverlässigen Halt des Kerns 17 im Rohr 15. Mit dem Bezugszeichen 18 ist ein zwischen den Abstandshaltern 16, dem Kern 17 und dem Rohr 15 verbleibender Ringspalt bezeichnet.

Der Ringspalt 18 kann insbesondere durch Abstandshalter 16 unterbrochen sein. Er kann durch die Abstandshalter 16 auch in Ringspaltabschnitte unterteilt sein, welche jeweils einen separaten Durchgang für den durchströmenden Kraftstoff F bilden.

Fig. 4 zeigt ein Ausführungsbeispiel eines Kerns 17. Dabei sind zweite Abstandshalter 19 um den Außenumfang des Kerns 17 gewunden, d. h. nach Art eines Abschnitts einer Helix ausgebildet. Infolgedessen bilden sich unter Verwendung eines solchen Kerns 17 in der Dämpfungsvorrichtung 14 eine Strömung mit einem Drall. Durch die Ausgestaltung der zweiten Abstandshalter 19 kann das Dämpfungsverhalten der Dämpfungsvorrichtung 14 beeinflusst werden.

Fig. 5 zeigt eine weitere Ausgestaltung eines Kerns 17, an dessen Außenumfang dritte Abstandshalter 20 vorgesehen sind.

Die dritten Abstandshalter 20 erstrecken sich in diesem Fall nicht über die gesamte axiale Länge des Kerns 17, sondern lediglich über einen relativ kleinen axialen Abschnitt. Fig. 6 zeigt eine weitere Dämpfungsvorrichtung. An der Innenseite des Rohrs 21 sind vierte Abstandshalter 22 angeformt sind. Ein derartiges Rohr 21 kann beispielsweise mittels Strangpressen hergestellt werden. Darin kann ein zylindrisch ausgestalteter Kern 17 mittels Einschrumpfen schnell und einfach befestigt werden.

Fig. 7 und 8 zeigen eine Draufsicht auf eine nicht vom Anspruchswortlaut umfasste dritte Dämpfungsvorrichtung. Dabei ist ein im Querschnitt "zahnradartig" ausgebildeter Kern 17 in einem zylindrischen Rohr 15 gehalten. Der Kern 17 kann beispielsweise mit mittels Extrusion hergestellt werden. Er ist zweckmäßigerweise in das Rohr 15 eingeschrumpft.

Die Dämpfungsvorrichtung kann eine Länge von 2 bis 50 mm, vorzugsweise 5 bis 20 mm, aufweisen. Die Spaltweite beträgt zweckmäßigerweise 5 bis 200 $\mu$m, vorzugsweise 80 bis 120 $\mu$m. Die Dämpfungsvorrichtung kann im Bereich des Verteilerrohrs 8, insbesondere am Eingang des Verteilerrohrs 8 und/oder in die zweiten Hochdruckleitungen 9 eingeschaltet sein.

Nach einer besonders vorteilhaften Ausgestaltung ist das Dämpfungselement mit einer Druckmesseinrichtung kombiniert. Mit der Druckmesseinrichtung kann stromauf- und stromabwärts der Dämpfungsvorrichtung jeweils der Druck gemessen werden. Aus der Differenz der gemessenen Drücke kann der momentane Massenstrom bestimmt werden.

Die Dämpfungsvorrichtung kann stromaufwärts des Kerns ein Zulaufrohr und stromabwärts des Kerns ein Ablaufrohr aufweisen. Ein Durchmesser des Zu- und Ablaufrohrs sind zweckmäßigerweise kleiner als ein Durchmesser des den Kern umgebenden Rohrs. Zum Anschluss der Druckmesseinrichtung kann ein Zu- und Ablaufrohr jeweils eine Bohrung, vorzugsweise eine Gewindebohrung vorgesehen sein.

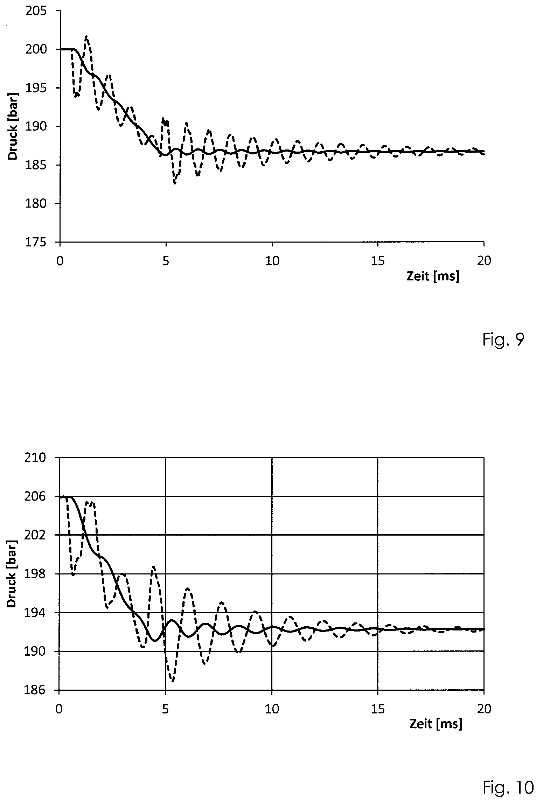

Fig. 9 zeigt den Druckverlauf am Injektor sowie am Common Rail Rohr bei einem Kraftstoffeinspritzsystem, welches keine Dämpfungsvorrichtung aufweist. Die Simulation beruht auf einer Berechnung, welche mit dem Programm "LMS Imagine.Lab AMESim" der Firma LMS International NV durchgeführt worden ist. Die Simulation ist unter Verwendung der folgenden Randbedingungen durchgeführt worden:

| | |
|---|---|
| Druck | 200 bar |
| Volumen des Common Rail Rohrs | 60 cm$^3$ |
| Durchmesser der Einspritzleitung | 3 mm |
| Länge der Einspritzleitung | 87 mm |
| Durchmesser der elektronisch steuerbaren Öffnung | 2 mm |
| Eingespritztes Volumen | 0,5 mm$^3$ |
| Durchmesser der Düse | 0,3 mm |

Insbesondere aus dem Druckverlauf am Common Rail Rohr (durchgezogene Linie) ist erkennbar, dass der Injektor im Zeitfenster zwischen 1 ms und 5 ms geöffnet ist. Am Injektor (unterbrochene Linie) entstehen ab dem Zeitpunkt 5 ms Druckpulsationen, welche eine anfängliche maximale Amplitude von etwa 10 bar haben und dann abnehmen.

Fig. 10 zeigt das Ergebnis von Messungen, welche die in Fig. 9 wiedergegebene Simulation bestätigt. Auch hier öffnet der Injektor (unterbrochene Linie) im Zeitfenster zwischen etwa 1 ms bis 5 ms.

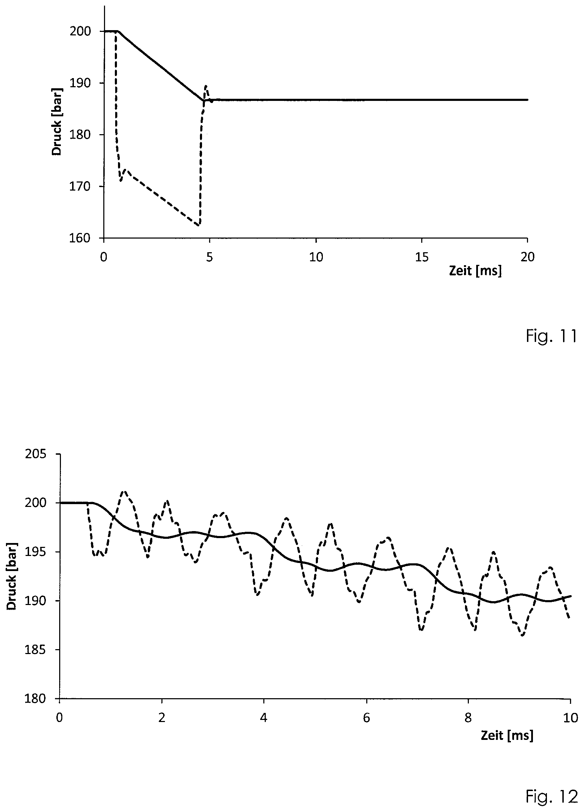

Fig. 11 zeigt eine Simulation der Druckverläufe am Injektor (unterbrochene Linie) und am Common Rail Rohr (durchgezogene Linie), wobei das Kraftstoffeinspritzsystem mit einer erfindungsgemäßen Dämpfungsvorrichtung versehen ist. Es sind zur Simulation folgende weitere Parameter verwendet worden:

| | |
|---|---|
| Innendurchmesser d des Rohrs | 10,00 mm |
| Außendurchmesser D des Kerns | 9,94 mm |
| Länge $\ell$ des Dämpfers | 10,00 mm |

Wie aus Fig. 11 ersichtlich ist, treten nach dem Schließen des Injektors kaum mehr Druckpulsationen im Kraftstoffeinspritzsystem auf. Insbesondere sind am Common Rail Rohr keine Druckpulsationen zu beobachten.

Die Fig. 12 zeigt eine weitere Simulation der Druckverläufe am Injektor (unterbrochene Linie) und am Common Rail Rohr (durchgezogene Linie), wobei keine Dämpfungsvorrichtung vorgesehen ist. Die weitere Simulation betrifft eine Mehrfacheinspritzung, wobei der Injektor dreimal für eine Zeitdauer von etwa 1,5 ms geöffnet wird. Wie aus Fig. 12 ersichtlich ist, treten dabei erhebliche Druckpulsationen am Injektor auf.

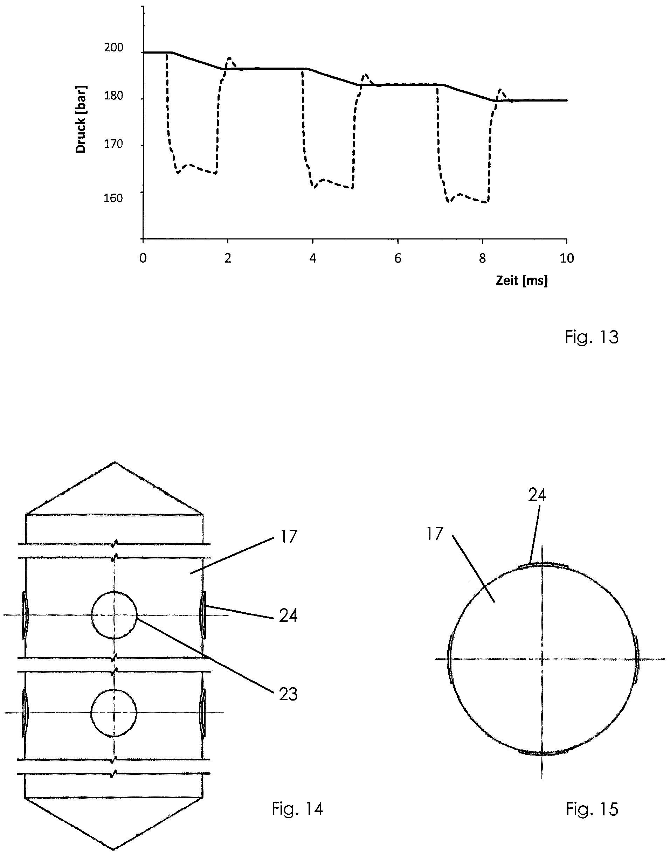

Fig. 13 zeigt eine weitere Simulation gemäß Fig. 12, wobei hier das Kraftstoffeinspritzsystem mit einer erfindungsgemäßen Dämpfungsvorrichtung versehen ist. Auch dabei ist zu beobachten, dass praktisch keine Druckpulsationen am Injektor (unterbrochene Linie) oder am Common Rail Rohr (durchgezogene Linie) mehr auftreten.

Bei den in den Fig. 12 und 13 gezeigten Simulationen sind die obigen Randbedingungen verwendet worden.

Die vorgeschlagene Dämpfungsvorrichtung bewirkt in einem Kraftstoffeinspritzsystem, insbesondere in einem Common Rail Einspritzsystem, also eine hervorragende Dämpfung von Druckpulsationen. Damit ist es möglich, die Verbrennung in einem Verbrennungsmotor besser zu kontrollieren und damit einen unerwünschten Abgasausstoß zu vermindern.

Die Fig. 14 und 15 zeigen eine weitere Ausgestaltung eines Kerns 17. Der Kern 17 weist ein zylindrisches Mittelteil auf. Die beiden Enden des Kerns 17 sind kegelförmig ausgebildet und laufen spitz zu. Der Kern 17 weist radial verlaufende Bohrungen 23 auf, in welche Stifte 24 eingesetzt sind, die über einen vorgegebenen Abstand vom Umfang des Kerns 17 hervorstehen. Die Stifte 24 wirken als Abstandshalter. Die Bohrungen 23 sind vorteilhafterweise radial versetzt um 90° über den Umfang verteilt. Es können mehrere axiale Ebenen vorgesehen sein, in denen radial um den Umfang drei, vier oder mehr Stifte 24 vorgesehen sind. Der in den Fig. 14 und 15 beschriebene Kern 17 kann ähnlich wie die in den Fig. 2 bis 7 beschriebenen Kerne 17 in ein zylindrisches Rohr 15 eingepasst oder eingeschrumpft werden. Es ergibt sich damit eine einfach herzustellende Dämpfungsvorrichtung.

Bezugszeichenliste

| | |
|---|---|
| 1 | Tank |
| 2 | Kraftstoffleitung |
| 3 | Kraftstofffilter |
| 4 | Kraftstoffförderpumpe |
| 5 | Druckregelventil |
| 6 | Hochdruckpumpe |
| 7 | erste Hochdruckleitung |
| 8 | Verteilerrohr |
| 9 | zweite Hochdruckleitung |
| 10 | Injektor |
| 11 | Steuergerät |
| 12 | Druckbegrenzer |
| 13 | Rail Drucksensor |
| 14 | Dämpfungsvorrichtung |
| 15 | Rohr |
| 16 | erster Abstandshalter |
| 17 | Kern |

18 Ringspalt
19 zweiter Abstandshalter
20 dritter Abstandshalter
21 weiteres Rohr
22 vierter Abstandshalter
23 Bohrung
24 Stift

F Kraftstoff

## Patentansprüche

1. Kraftstoffeinspritzsystem, insbesondere ein Common Rail Einspritzsystem, bei dem Kraftstoff (F) von einem Verteilerrohr (8) über Hochdruckleitungen (9) jeweils zu Injektoren (10) geführt wird, mit denen der Kraftstoff (F) während eines Einspritzzyklus mit mehreren Einspritzimpulsen einspritzbar ist, wobei jede der Hochdruckleitungen (9) mit zumindest einer Dämpfungsvorrichtung (14) zum Dämpfen von Druckpulsationen versehen ist,
**dadurch gekennzeichnet, dass**
die Dämpfungsvorrichtung (14) ein Rohr (15, 21) aufweist, in dem ein über Abstandshalter (16, 19, 20, 22) unter Ausbildung eines unterbrochenen Ringspalts (18) beabstandet gehaltener massiver Kern (17) vorgesehen ist, wobei sich die Abstandshalter (16, 19, 20, 22) radial von der Innenseite des Rohrs (15, 21) bis zur Außenseite des Kerns (17) erstrecken,
wobei sich die Abstandshalter (16, 19, 20, 22) entweder

a) axial über die gesamte Länge des zylindrischen Kerns (17) parallel zur Axialrichtung erstrecken, oder
b) über die gesamte Länge des zylindrischen Kerns (17) erstrecken und nach Art eines Abschnitts einer Helix um den Außenumfang des Kerns (17) gewunden sind, oder
c) lediglich über einen relativ kleinen axialen Abschnitt des Kerns (17) parallel zur Axialrichtung erstrecken.

2. Kraftstoffeinspritzsystem nach Anspruch 1, wobei eine axiale Länge $\ell$ des Kerns 0,5 bis 50 mm beträgt.

3. Kraftstoffeinspritzsystem nach einem der vorhergehenden Ansprüche, wobei eine durch die Differenz eines Innendurchmessers d des Rohrs und eines Außendurchmessers D des Kerns gegebene Spaltweite $\delta$ 5 $\mu$m bis 200 $\mu$m beträgt.

4. Kraftstoffeinspritzsystem nach einem der vorhergehenden Ansprüche, wobei der Außendurchmesser D des Kerns 10 bis 20 mm beträgt.

5. Kraftstoffeinspritzsystem nach einem der vorhergehenden Ansprüche, wobei die Länge $\ell$ und die Spaltweite $\delta$ so gewählt sind, dass ein Druckverlust $\Delta P$ zwischen 3 und 12 bar, vorzugsweise zwischen 6 und 9 bar, liegt, wobei gilt:

$$\Delta P = [const.* \mu * \dot{v} * \ell]/[\delta 3 * D],$$

wobei

$\mu$ eine vorgegebene Viskosität des Kraftstoffs
$dV/dt$ ein vorgegebener Volumenstrom, und
$D$ der Außendurchmesser des Kerns ist.

6. Kraftstoffeinspritzsystem nach einem der vorhergehenden Ansprüche, wobei die Abstandshalter (16, 19, 20, 22) gleichmäßig über den Außenumfang des Kerns (17) verteilt sind.

7. Kraftstoffeinspritzsystem nach einem der vorhergehenden Ansprüche, wobei n Abstandshalter (16, 19, 20, 22) jeweils in einem Winkel von 360°/n voneinander beabstandet über den Außenumfang des Kerns (17) verteilt sind.

8. Kraftstoffeinspritzsystem nach einem der vorhergehenden Ansprüche, wobei der Kern (17) in einem Stück mit den Abstandshaltern (16, 19, 20, 22) ausgebildet ist.

9. Kraftstoffeinspritzsystem nach einem der vorhergehenden Ansprüche, wobei das Rohr (15, 21) in einem Stück mit den Abstandshaltern (16, 19, 20, 22) ausgebildet ist.

10. Kraftstoffeinspritzsystem nach einem der vorhergehenden Ansprüche, wobei der Kern (17) und/oder das Rohr (15, 21) mittels Strangpressen hergestellt ist/sind.

11. Kraftstoffeinspritzsystem nach einem der vorhergehenden Ansprüche, wobei das Rohr (15, 21) und/oder der Kern (17) aus Metall, vorzugsweise aus Edelstahl, hergestellt ist/sind.

12. Kraftstoffeinspritzsystem nach einem der vorhergehenden Ansprüche, wobei der Kern (17) unter Zwischenschaltung der Abstandshalter (16, 19, 20, 22) in das Rohr (15, 21) eingeschrumpft ist.

13. Kraftstoffeinspritzsystem nach einem der vorhergehenden Ansprüche, wobei die Abstandshalter (16, 19, 20, 22) aus Stiften (24) gebildet sind, welche in im Kern (17) vorgesehene Bohrungen (23) eingesetzt sind.

**Claims**

1. A fuel injection system, in particular a common rail injection system, in which fuel (F) is conducted from a distributor pipe (8) via high-pressure lines (9) to injectors (10), by means of which the fuel (F) can be injected during an injection cycle with a number of injection pulses, wherein each of the high-pressure lines (9) is provided with at least one damping device (14) for damping pressure pulsations,
   **characterized in that**
   the damping device (14) has a pipe (15, 21), in which a massive core (17) that is held at a distance via spacers (16, 19, 20, 22) so as to form an interrupted annular gap (18) is provided,
   wherein the spacers (16, 19, 20, 22) extend radially from the inner side of the pipe (15, 21) to the outer side of the core (17),
   wherein the spacers (16, 19, 20, 22) extend either

   a) axially over the entire length of the cylindrical core (17) parallel to the axial direction, or
   b) over the entire length of the cylindrical core (17) being wound around the outer periphery of the core (17) in the manner of a portion of a helix, or
   c) merely over a relatively small axial portion of the core (17) parallel to the axial direction.

2. The fuel injection system according to Claim 1, wherein an axial length $\ell$ of the core is 0.5 to 50 mm.

3. The fuel injection system according to one of the preceding claims, wherein a gap width $\delta$ given by the difference of an inner diameter d of the pipe and an outer diameter D of the core is 5 $\mu$m to 200 $\mu$m.

4. The fuel injection system according to one of the preceding claims, wherein the outer diameter D of the core is 10 to 20 mm.

5. The fuel injection system according to one of the preceding claims, wherein the length $\ell$ and the gap width $\delta$ are selected such that a pressure loss $\Delta P$ is between 3 and 12 bar, preferably between 6 and 9 bar, wherein the following is true:

$$\Delta P = [const.* \mu * \dot{v} * \ell] / [\delta 3 * D],$$

wherein

   $\mu$ is a predefined viscosity of the fuel
   $dV/dt$ is a predefined volume flow rate, and
   $D$ is the outer diameter of the core.

6. The fuel injection system according to one of the preceding claims, wherein the spacers (16, 19, 20, 22) are distributed uniformly over the outer periphery of the core (17).

**7.** The fuel injection system according to one of the preceding claims, wherein n spacers (16, 19, 20, 22) are distributed over the outer periphery of the core (17), in each case distanced from one another by an angle of 360°/n.

**8.** The fuel injection system according to one of the preceding claims, wherein the core (17) is formed in one piece with the spacers (16, 19, 20, 22).

**9.** The fuel injection system according to one of the preceding claims, wherein the pipe (15, 21) is formed in one piece with the spacers (16, 19, 20, 22).

**10.** The fuel injection system according to one of the preceding claims, wherein the core (17) and/or the pipe (15, 21) is/are produced by means of extrusion.

**11.** The fuel injection system according to one of the preceding claims, wherein the pipe (15, 21) and/or the core (17) is/are produced from metal, preferably from high-grade steel.

**12.** The fuel injection system according to one of the preceding claims, wherein the core (17) is shrunk into the pipe (15, 21) with interpositioning of the spacers (16, 19, 20, 22).

**13.** The fuel injection system according to one of the preceding claims, wherein the spacers (16, 19, 20, 22) are formed from pins (24) that are inserted into bores (23) provided in the core (17).

**Revendications**

**1.** Système d'injection de carburant, notamment système d'injection Common Rail, dans lequel du carburant (F) est guidé d'une rampe d'injection (8) par le biais de conduites haute pression (9) à chaque fois vers des injecteurs (10) avec lesquels le carburant (F) peut être injecté pendant un cycle d'injection avec plusieurs impulsions d'injection, dans lequel chacune des conduites haute pression (9) est pourvue d'au moins un dispositif d'amortissement (14) pour l'amortissement de pulsations de pression,

**caractérisé en ce que**

le dispositif d'amortissement (14) présente un tuyau (15, 21) dans lequel un noyau massif (17) maintenu de manière écartée par le biais d'écarteurs (16, 19, 20, 22) en formant une fente annulaire interrompue (18) est prévu, dans lequel les écarteurs (16, 19, 20, 22) s'étendent radialement du côté interne du tuyau (15, 21) au côté externe du noyau (17),

dans lequel les écarteurs (16, 19, 20, 22)

a) s'étendent axialement sur la longueur entière du noyau cylindrique (17) parallèlement à la direction axiale, ou
b) s'étendent sur la longueur entière du noyau cylindrique (17) et sont enroulés à la manière d'une section d'une hélice autour de la périphérie externe du noyau (17), ou
c) s'étendent seulement sur une section axiale relativement petite du noyau (17) parallèlement à la direction axiale.

**2.** Système d'injection de carburant selon la revendication 1, dans lequel une longueur axiale $\ell$ du noyau se monte à 0,5 à 50 mm.

**3.** Système d'injection de carburant selon une des revendications précédentes, dans lequel une largeur de fente $\delta$ donnée par la différence entre un diamètre interne d du tuyau et un diamètre externe D du noyau se monte à 5 $\mu$m à 200 $\mu$m.

**4.** Système d'injection de carburant selon une des revendications précédentes, dans lequel le diamètre externe D du noyau se monte à 10 à 20 mm.

**5.** Système d'injection de carburant selon une des revendications précédentes, dans lequel la longueur $\ell$ et la largeur de fente $\delta$ sont choisies de sorte qu'une perte de pression $\Delta P$ se situe entre 3 et 12 bars, de préférence entre 6 et 9 bars, dans lequel s'applique :

$$\Delta P = [const.* \mu * \dot{v} * \ell]/[\delta 3 * D],$$

dans lequel

$\mu$ est une viscosité prédéfinie du carburant,
$dV/dt$ est un courant volumique prédéfini, et
$D$ est le diamètre externe du noyau.

6. Système d'injection de carburant selon une des revendications précédentes, dans lequel les écarteurs (16, 19, 20, 22) sont répartis régulièrement sur la périphérie externe du noyau (17).

7. Système d'injection de carburant selon une des revendications précédentes, dans lequel n écarteurs (16, 19, 20, 22) sont à chaque fois répartis de manière écartée à un angle de 360°/n les uns des autres sur la périphérie externe du noyau (17).

8. Système d'injection de carburant selon une des revendications précédentes, dans lequel le noyau (17) est réalisé d'une pièce avec les écarteurs (16, 19, 20, 22).

9. Système d'injection de carburant selon une des revendications précédentes, dans lequel le tuyau (15, 21) est réalisé d'une pièce avec les écarteurs (16, 19, 20, 22).

10. Système d'injection de carburant selon une des revendications précédentes, dans lequel le noyau (17) et/ou le tuyau (15, 21) est/sont fabriqué(s) par extrusion.

11. Système d'injection de carburant selon une des revendications précédentes, dans lequel le tuyau (15, 21) et/ou le noyau (17) est/sont fabriqué(s) en métal, de préférence en acier inoxydable.

12. Système d'injection de carburant selon une des revendications précédentes, dans lequel le noyau (17) est rétracté dans le tuyau (15, 21) en intercalant les écarteurs (16, 19, 20, 22).

13. Système d'injection de carburant selon une des revendications précédentes, dans lequel les écarteurs (16, 19, 20, 22) sont formés de broches (24) qui sont insérées dans des alésages (23) prévus dans le noyau (17).

Fig. 1

Fig. 2

Fig. 3

Fig. 6

Fig. 4

Fig. 8

Fig. 7

Fig. 5

Fig. 9

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004036029 A1
- DE 10351089 A1
- EP 1741925 A1
- JP 08261099 A
- DE 102006016937 A1
- JP 09170514 A